# EUROPEAN PATENT APPLICATION

(11) **EP 4 369 506 A1**
(43) Date of publication of application: **15.05.2024**
(21) Application number: 22315264.6
(22) Date of filing: 08.11.2022
(51) Int. Cl.: H01M 50/503, H01M 50/517, H01M 50/588, H01M 50/591

(54) **CONNECTION BAR**

(71) Applicant: A. Raymond et Cie, 38000 Grenoble (FR)
(72) Inventor: SANCHEZ, Anthony, 38950 Saint Martin le Vinoux (FR); COCHARD, Mathieu, 38120 Proveysieux (FR); MICHEL, Claude, 38580 Allevard (FR); BINKERT, Sven, 79540 Loerrach (DE)
(74) Representative: König Szynka Tilmann von Renesse Patentanwälte Partnerschaft mbB Düsseldorf

(57) **Abstract**

The invention relates to a connection bar (2) for connecting battery terminals (4) of batteries (6) to each other, comprising a connection element (8), at least two conductor elements (10) for contacting a battery terminal of a battery, at least two housings (12), wherein the at least two conductor elements (10) are attached to the opposite ends of the connection element (8), wherein the at least two housings (12) are arranged on the at least two conductor elements (10), wherein the at least two housings (12) are configured to fix the at least two conductor elements (10) to the battery terminals (4) of the batteries (6).

## Description

The invention relates to a connection bar for connecting battery terminals of batteries to each other.

A connection bar is used in multipleapplications like for example electric cars, electric bikes and so on. The amount of energy and the voltage depends for example on the electric car or the electric bike. The connection bar is used for connecting battery terminals of batteries to each other. In this way, a battery unit is formed that provides a suitable voltage and a suitable amount of energy. The amount of energy and the voltage can be adapted by the number of batteries connected by connection bars which form the battery unit.

The connection of the batteries is crucial for a functional battery unit and thus for a working application like an electric car. Hence, the connection bar must be able to withstand the challenges during operation of the battery unit.

A challenge are the vibrations occurring for example during a drive of the electric car. The connection bar should provide a good connection to the battery terminals of the battery unit, because only a sufficient contact area provides a sufficient electrical connection. The sufficient electrical connection is mandatory to achieve the needed amount of energy and the needed voltage as well as to control the electrical current.

In addition, a repair and a maintenance of the battery unit should be easily accomplished. Therefore, the connection of the at least one battery terminal and the at least one connection element should be detachable. Hence, the connection bar must be easy to assemble and to disassemble.

Based on this prior art it is an object of the present invention to provide a connection bar which can provide a constant amount of energy and constant voltage, wherein the electrical current is easy to control, while at the same time the connection bar provides safety and there is a good connection between the at least one connection bar and the at least one battery, which is also easy to detach. In addition, it is an object of the present invention to provide a method to produce a connection bar, a battery unit, and a method for assembly of a battery unit.

The above-mentioned object is solved by a connection bar for connecting battery terminals of batteries to each other, comprising
- a connection element,
- at least two conductor elements for contacting a battery terminal of a battery,
- at least two housings,
- wherein the.at least two conductor elements are attached to the opposite ends of the connection element,
- wherein the at least two housings are arranged on the at least two conductor elements,
- wherein the at least two housings are configured to fix the at least two conductor elements to the battery terminals of the batteries.

In doing so, the at least two housings are used to fix the at least two conductors and thus the connection bar to battery terminals. Because the housing is the outermost part of the connection bar, it is easy to reach and to handle. Consequently, the connection bar is easy to assemble and to disassemble. In addition, the connection bar provides a good connection of the conductor elements to the battery terminals such that the electrical current is easy to control and that a constant amount of energy and constant voltage is provided.

The connection bar can be a busbar.

The connection element can be used to connect the at least two conductor elements to each other. The connection element can be made of copper. Hence, the electrical conductivity of the connection bar can be high. The connection element can be an electrically conductive strip. Hence, the connection bar can have a good electrical conductivity and can be space-saving.

The at least two conductor elements for contacting a battery terminal of a battery can comprise a surface for contacting a battery terminal. The at least two conductor elements can have a surface coated with silver and/or nickel to enhance the electrical conductivity and the surface hardness. Thus, the durability of the connection bar can be increased. The at least two conductor elements can be attached to the opposite ends of the connection element. Opposite ends can mean the ends of the connection element, which can be on opposite ends of the longitudinal axis of the connection element.

The at least two housing can be hollow bodies. The at least two housing can be arranged on the at least two conductor elements such that the at least two conductor elements are at least partially surrounded by the at least two housing. At least partially surrounded can mean that the surface of the at least two conductor elements can be completely or partially covered by the at least two housings. In both cases an opening to insert a battery terminal can be uncovered.

The at least two housings can be configured to fix the connection bar to the battery terminals of the batteries in a form-locking and/or force-locking manner. In doing so, the connection bar can be assembled to battery terminals in an easy way. The at least two housings can be configured to be detachable from the battery terminals of the batteries. In this way, the busbar can be removed for a repair or a maintenance.

The at least two housings can each be made of one component or at least two components. If the at least two housings can each be made of one component, the at least two housings can be cheap and easily produced.

If the at least two housings can each be made of at least two components, the assembly of the at least two housings on the at least two conductor elements can be simple. In addition, the molding can be simplified, since the at least two components can be free of undercuts. Further, the at least two housings can be adapted very precise to the at least two conductor elements so that the at least two housings can have better manufacturing tolerances. This can also lead to an improved tolerance compensation, in particular a tolerance compensation in the direction perpendicular to the opening to insert a battery terminal. The tolerance compensation can also be improved in a vertical direction.

The at least two housings can consist of insulating material. Thus, insulated material can be used to fix the at least two conductor elements so that assembly and disassembly can be easy and without the risk of an electric shock.

The connection bar can have a contact resistance smaller than 30µOhm. This provides a very good electrical current flow.

In an embodiment the connection bar can comprise at least one insulation element, wherein the at least one insulation element can be arranged on the connection element, wherein the surface of the connection bar can be insulated by the at least two housings and the at least one insulation element.

In this way, the connection bar can be completely insulated so that the there can be no risk of an electric shock. In addition, the connection bar can have IPxxB protection class. The IPxxB protection class is defined in the norm EN IEC 60529.

The at least one insulation element can be a shrinking tube. A shrinking tube can be easy to assemble and can support the flexibility of the connection bar. In addition, a shrinking tube is cheap. The shrinking tube can be 0.3 - 0.7 mm, preferably 0.5 mm thick. In this, way the flexibility of the connection bar can be supported.

The at least one insulation element can be a molded insulator made of plastic, in particular a V-0 rated plastic. A molded insulator made of plastic can be cheap and durable such that the cost of the connection bar can be low, while at the same time the durability can be increased. If the at least one insulation element can be made of a V-0 rated plastic a burning of the connection bar can be stopped or can be inhibited. A V-0 rated plastic can be defined according to UL 94, the Standard for Safety of Flammability of Plastic Materials for Parts in Devices and Appliances testing.

The at least one insulation element can comprise a lid. The lid can be configured to flushmount the at least one battery terminal. The lid can be configured to close the surface of the at least one battery terminal such that a flat surface can be provided when the connection bar can be installed in a battery unit. In doing so, the insulating properties of the connection bar can be improved. In addition, the risk of an injury during a maintenance or during a repair can be reduced.

In an embodiment the at least two conductor elements can each have at least two clamp legs, wherein at least one of which can be elastically moveable so as to vary an interspace between the clamp legs. In doing so, a battery terminal can be inserted into the interspace such that a very good electrical connection can be established. Hence, the connection bar can provide good electrical contact and a good electrical current flow.

The interspace can be configured to receive a battery terminal. In doing so, the connection bar can provide a very good electrical connection such that the connection bar can provide good electrical contact and a good electrical current flow

The at least two conductor elements can have a U-formed shape, wherein the at least two clamp legs can be facing each other and can be connected by abase. In this way, a battery terminal can be surrounded by the at least two conductor elements such that a very good electrical contact can be achieved.

In an embodiment the at least two conductor elements can be welded to the connection element. In this way, the electrical connection between the at least two conductor elements and the connection element can be very good. Hence, the connection bar can have a good electrical conductivity such that the connection bar can provide a good connection of the conductor elements to battery terminals such that the electrical current is easy to control and that a constant amount of energy and constant voltage can be provided.

In an embodiment the connection bar can comprise at least two clips, wherein one of the at least two clips can be arranged on one of the at least two conductor elements, wherein the at least two clips can be configured to strengthen the contact between the at least two conductor elements and the battery terminals of a batteries.

In doing so, the contact of the at least two conductor elements and the battery terminals can be enhanced. Thus, the electrical conductivity of the connection bar can be improved.

The at least two clips can be part of the at least two conductor elements or separate parts. If the at least two clips can be part of the at least two conductor elements the assembly can be simple. If the at least two clips can be separate parts, the properties of the at least two clips can be easily adapted.

The at least two clips can surround the at least two conductor elements at least partially. At least partially surrounded can mean that the at least two conductor elements can be completely surrounded except for the opening to insert the electrode into.

The clamping force of the connection bar can be 100 N. In doing so, a good connection of the at least two conductor elements to battery terminals can be provided increasing the electrical conductivity.

In an embodiment the at least two clips can comprise or can consist of a spring steel. In this way, the durability of the at least two clips and hence the durability of the connection bar can be increased. The spring steel can be austempered carbon steel or austenitic stainless spring steel. Both steels can provide a good durability and a good clamping force.

In an embodiment the at least two housings can comprise each a snap fit to fix the connection bar to the battery terminals of the batteries. A snap fit can be easy to assemble and can be cheap. In this way, the connection bar can be cheap and easy to assemble. In addition, the connection bar can be connected to a battery terminal in a stable way.

The snap fit can be configured to engage with a counterpart at the battery. In this way, the connection bar can be strongly fixed to the battery. Hence, a good electrical connection can be provided.

In an embodiment the at least two housings each can comprise an opening to insert the battery terminal, wherein the at least two housings can be configured to prevent a movement of the connection element, the at least two conductor elements and/or the at least two clips relative to the at least two housings in a plane comprising the opening or a plane parallel to the plane of the opening, and/or wherein the at least two housings can be configured to insulate a battery terminal, in particular the at least two housings can be configured to cover, in particular in a form fit manner, a battery terminal.

If the at least two housings can be configured to prevent a movement of the connection element, the at least two conductor elements and/or the at least two clips relative to the at least two housings in a plane comprising the opening or a plane parallel to the plane of the opening, the contact of the connection element, the at least two conductor elements and/or the at least two clips to a battery terminal can be stable. Thus, the surface contact can be stable such that a good electrical conductivity can be achieved. In addition, a movement can be prevented for example despite vibrations during a drive.

The at least two housings can be configured to prevent a movement of the connection element, the at least two conductor elements and/or the at least two clips relative to the at least two housings in a plane comprising the opening or a plane parallel to the plane of the opening in a form-locking and/or force-locking manner. Hence, the connection bar can be assembled to battery terminals in an easy way.

The at least two housings can have at least one protruding blocking element that can engage with the connection element, the at least two conductor elements and/ or the at least two clips. The at least one protruding blocking element can be cheaply produced and can provide a very stable and easy way to prevent a movement.

The at least two housings can have at least one clamping element that can clamp the connection element, the at least two conductor elements and/ or the at least two clips. In doing so, the surface contact can be stable in an easy way by the at least one clamping element. In addition, the at least one clamping element can easily be adapted to a suitable clamping force.

The connection element, the at least two conductor elements and/ or the at least two clips can have at least one inlet configured to interact with the at least one protruding blocking element and/or the at least one clamping element. In doing so, the movement of the at least two conductor elements and/ or the at least two clips can be further decreased. In addition, the connection to the at least one protruding blocking element and/or the at least one clamping element can be strengthened.

The at least two housings can have at least one height adjustment mean to prevent a movement of the connection element, the at least two conductor elements and/or the at least two clips relative to the at least two housings in a plane perpendicular to the opening, in particular in a form-locking and/or force-locking manner.

In doing so, the retaining forces of the at least two housings can be effectively transmitted from the at least two housings to the connection bar. Thus, the connection of the at least two conductor elements to the battery terminals can be improved such that the electrical current can be easy to control and that a constant amount of energy and constant voltage can be provided

If the at least two housings can be configured to insulate a battery terminal, the security of the connection bar can be enhanced, since the battery terminals can be at least partially insulated from the environment to prevent an electrical contact with a person.

If the at least two housings can be configured to cover the battery terminal the enhanced security can be achieved in a reliable and cheap manner. In addition, the connection of the at least two conductor elements to the battery terminals can be improved, since the at least two housings can be connected to the at least two conductor elements as well as to the battery terminals.

If the at least two housings can be configured to cover at least partially in a form fit manner a battery terminal the enhanced security can be achieved in a reliable manner. In addition, the connection of the at least two conductor elements to the battery terminals can be improved, since the at least two housings can be connected to the at least two conductor elements as well as to the battery terminals. Thus, the insulation of the battery terminal can be guaranteed.

To cover at least partially in a form fit manner can mean that the battery terminal can be covered while at the same time the at least one housing can be connected to the at least one battery terminal in a form fit manner.

In an embodiment the at least two housings can comprise an information element to indicate the correct assembly of the connection bar to the battery terminals of the batteries. In this way, the connection bar can provide an easy way to assure a correct assembly. Since a correct assembly can be mandatory for a safe function of a battery unit, the connection bar can increase the safety.

In an embodiment the connection element can be extensible, in particular can have an extensible wavelike shape. In this way, the connection element can compensate a movement of the at least two conductor elements. Hence, the connection bar can be safely and stable attached to battery terminals. Thus, the safety can be increased. In addition, the electrical conductivity can be stable.

If the connection element can have an extensible wavelike shape the connection element can provide a large flexibility in a space-saving design. Hence, the safety and the electrical conductivity can be further increased.

According to another aspect of the invention the above-mentioned object is solved by a method to produce a connection bar, in particular a connection bar according to the invention, comprising the steps:
- providing a connection element,
- connecting, in particular welding, at least two conductor elements for contacting a battery terminal of a battery to the opposite ends of the connection element,
- arranging at least two housings on the at least two conductor elements.

The method provides the advantage that a connection bar with a good connection of the conductor elements to the battery terminals can easily be produced. In addition, the connection bar provides an electrical current that is easy to control and that provides a constant amount of energy and constant voltage.

In an embodiment at least one insulation element can be arranged on the connection element, and wherein the surface of the connection bar can be insulated by the at least one insulation element and the at least two housings, and wherein in particular the connection element is formed into a wavelike shape before or after the at least one insulation element is arranged on the connection element. In doing so, an electrical insulated surface can be produced such that an electric shock can be prevented. In this way, the connection element can compensate a movement of the at least two conductor elements. Hence, the connection bar can be safely and stable attached to battery terminals. Thus, the safety can be increased. In addition, the electrical conductivity can be stable

In an embodiment at least two clips can be arranged on the at least two conductor elements before arranging the at least two housings on the at least two conductor elements. The at least two clips can enhance the contact of the at least two conductor element and the battery terminals can be enhanced. Thus, the electrical conductivity of the connection bar can be improved.

According to another aspect of the invention the above-mentioned object is solved by a battery unit, in particular in a high current power supply system, the battery unit having at least two batteries and at least one connection bar according to the invention, wherein the at least two batteries each comprise at least two battery terminals wherein the at least one connection bar connects one battery terminal of each battery to each other.

The battery unit provides the advantage that the at least two housings are used to fix the at least two conductors and thus the connection bar to battery terminals. Because the housing is the outermost part of the connection bar, it is easy to reach and to handle. Consequently, the battery unit is easy to assemble and to disassemble. In addition, the connection bar provides a good connection of the conductor elements to the battery terminals such that the electrical current is easy to control and that a constant amount of energy and constant voltage is provided by the battery unit.

According to another aspect of the invention the above-mentioned object is solved by a method for assembly of a battery unit according to the invention comprising the steps:
- providing at least two batteries each comprising at least two battery terminals,
- providing a connection bar, in particular according to the invention,
- connecting one battery terminal of each battery to each other by the at least one connection bar.

The method provides the advantage that a battery unit can be easily manufactured.

The invention will now be particularly described with reference to the accompanying drawings.
- Fig. 1: a schematic view onto a battery unit,
- Fig. 2: a schematic view onto a battery unit,
- Fig. 3: a schematic view onto a battery unit,
- Fig. 4: an exploded view of a connection bar,
- Fig. 5: a cross section through a connection bar,
- Fig. 6: a cross section through a connection bar,
- Fig. 7: a cross section through a housing and a battery terminal,
- Fig. 8: a top view on a connection bar,
- Fig. 9: a schematic view of a connection bar,
- Fig. 10: a schematic view of a battery unit.

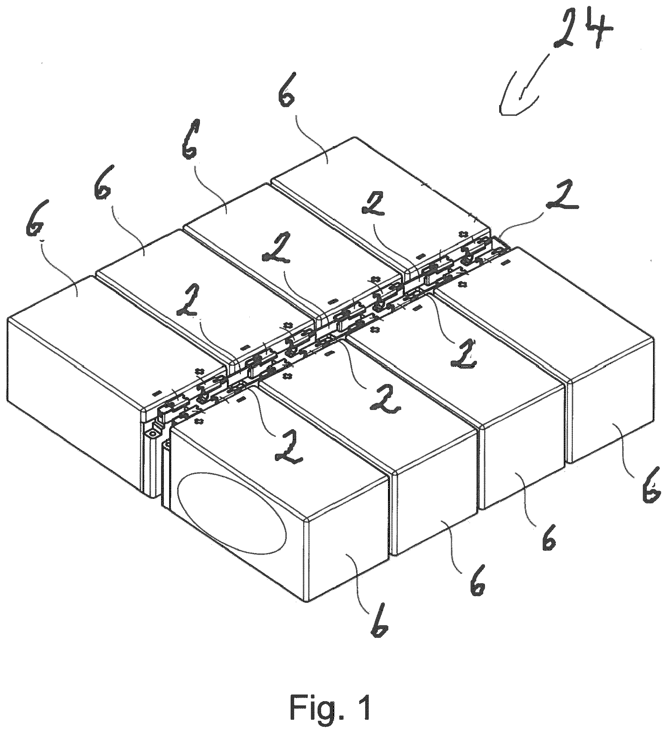

Fig. 1 shows a battery unit 24. The battery unit 24 comprises eight batteries 6 each having two battery terminals 4. The battery unit 2 comprises connection bars 2 having two conductor elements 10. The battery terminals 4 and the conductor elements 10 are electrically connected.

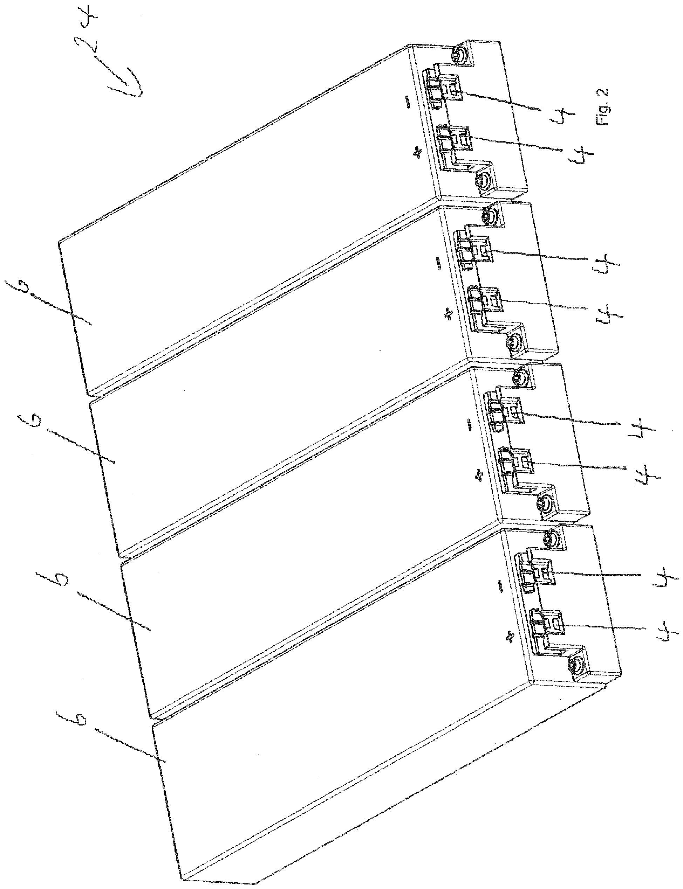

Fig. 2 shows a schematic view onto a battery unit 24. The battery unit 24 comprises four batteries 6. Each battery 6 has two battery terminals 4.

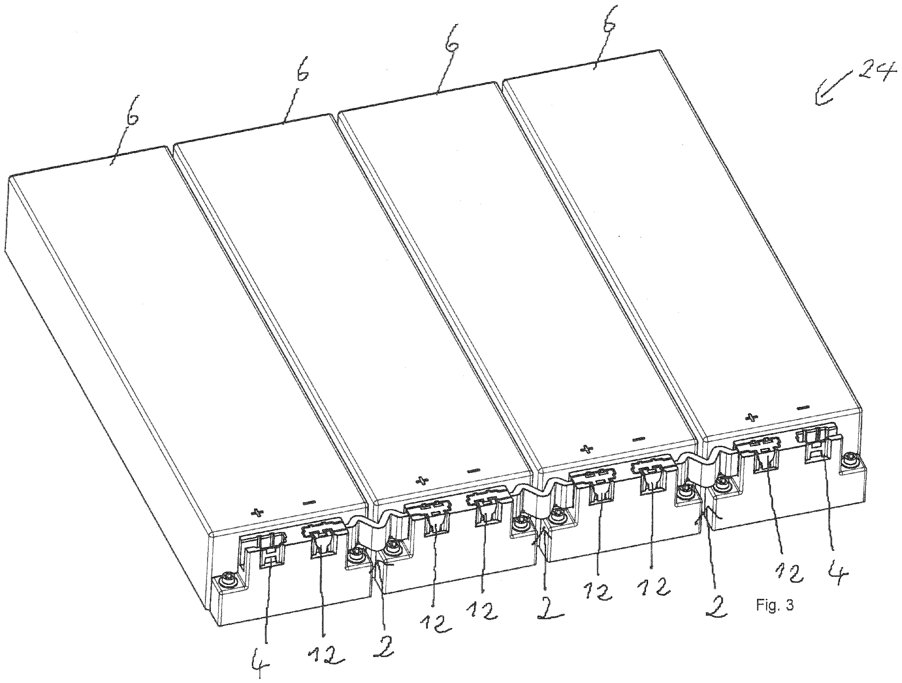

Fig. 3 shows a schematic view onto a battery unit 24. The battery unit 24 comprises four batteries 6. Each battery 6 has two battery terminals 4. The battery terminals 4 are connected by a connection bar 2 to each other. In this way, the batteries 6 are connected in series by the connection bar 2. The battery terminals 4 at the ends of the battery unit 24 are not connected.

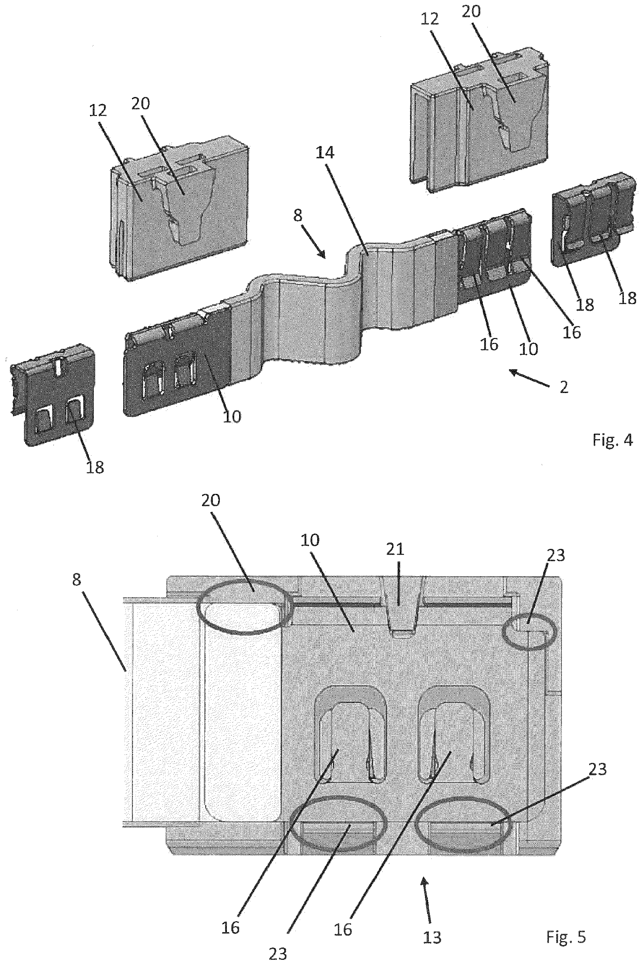

Fig. 4 shows an exploded view of a connection bar 2 for connecting battery terminals 4 of batteries 6 to each other. The connection bar 2 comprises a connection element 8, two conductor elements 10 for contacting a battery terminal 4 of a battery 6. The connection bar 2 comprises two housings 12. The two conductor elements 10 are attached to the opposite ends of the connection element 8. The two housings 12 are arranged on the two conductor elements 10. The two housings 12 are configured to fix the two conductor elements 10 to the battery terminals 4 of the batteries 6.

As can be seen the connection bar comprises an insulation element 14. The insulation element 14 is arranged on the connection element 8, wherein the surface of the connection bar is insulated by the two housings 12 and the insulation element 14.

The two conductor elements 10 have each at least two clamp legs 16, wherein one of which is elastically moveable so as to vary an interspace between the clamp legs 16. The two conductor elements 10 are welded to the connection element 8.

The connection bar 2 comprises two clips 18. One of the two clips 18 is arranged on one of the two conductor elements 10. The two clips 18 are configured to strengthen the contact between the two conductor elements 10 and the battery terminals 4 of a battery 6. The clips 18 consist of a spring steel.

The two housings 12 comprise each a snap fit 20 to fix the connection bar 2 to the battery terminals 4 of the batteries 6.

Fig. 5 shows a cross section through a connection bar 2. In Fig. 5 a housing 12, a conductor element 10 and a connection element 8 can be seen. The housings 12 comprises an opening 13 to insert the battery terminal. The housing 12 is configured to prevent a movement of the connection element 8, the conductor element 10 and the clip 18 relative to the housing 12 in a plane comprising the opening or a plane parallel to the plane of the opening.

The housing 12 has a protruding blocking element 21 that can engage with the conductor elements 10 and the clip 18. In addition, the housing 12 has three clamping elements 23 that clamp the conductor element 10 and the clip 18.

Additionally, or alternatively, the housing 12 is configured to insulate the battery terminal 4. The housing 12 is configured to cover at least partially in a form fit manner the battery terminal 4.

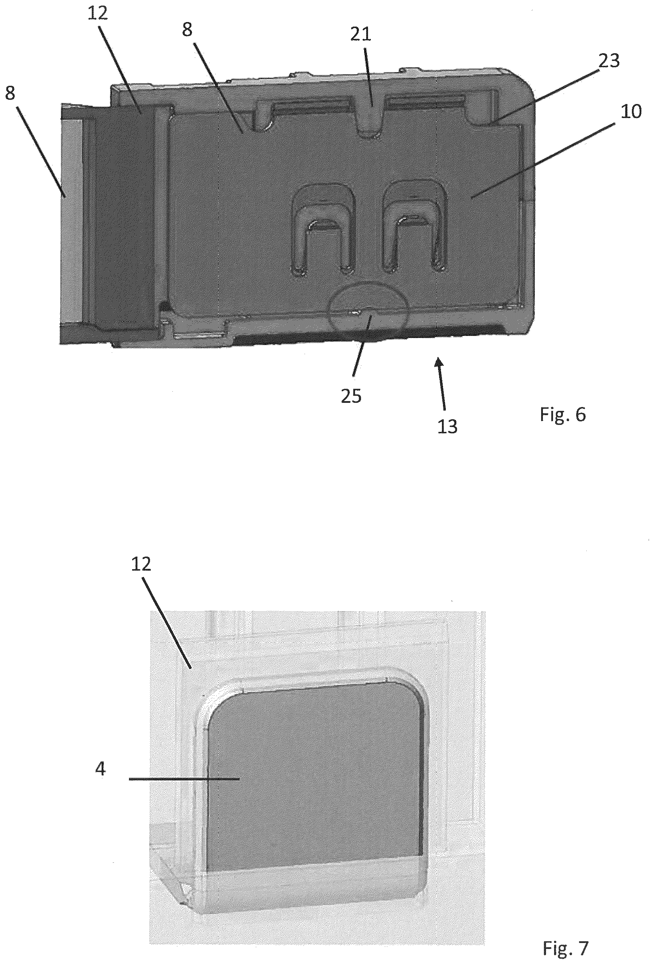

Fig. 6 shows a cross section through a connection bar 2. The housing 12, the conductor element 10 and the connection element 8 of the connection bar 2 can be seen. The housing 12 is made of two components. The housing 12 has a height adjustment mean 25 to prevent a movement of the connection element, the conductor element and the clip relative to the housing in a plane perpendicular to the opening. This is realised in a form-locking manner.

Fig. 7 shows a cross section through a housing 12 and a battery terminal 4. As can be seen in Fig. 7 the housing 12 is configured to insulate the battery terminal 4. Therefore, the housing 12 is configured to cover at least partially in a form fit manner the battery terminal 4.

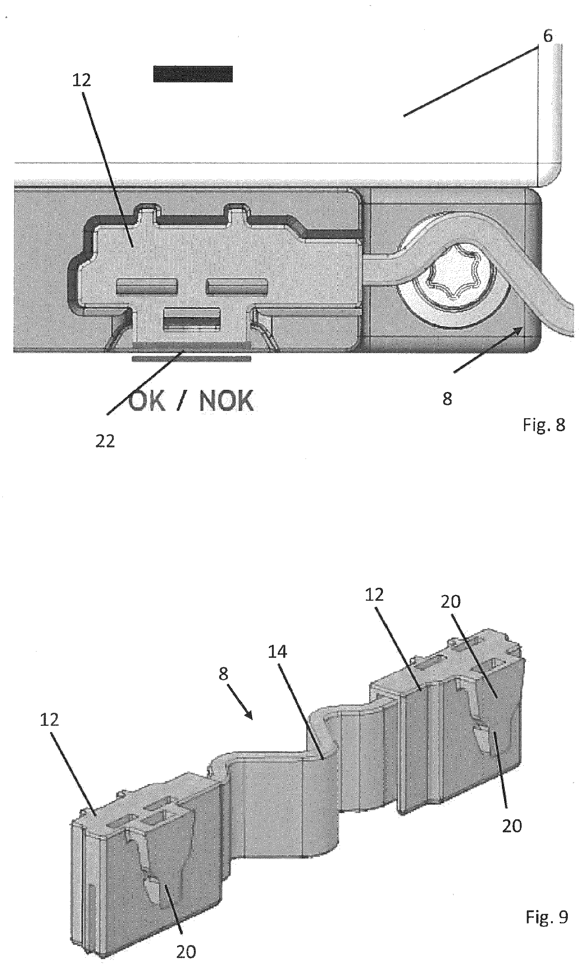

Fig. 8 shows a top view on a connection bar 2. In Fig. 8 a housing 12, a connection element 8 and a battery 6 can be seen. The housing 12 comprises an information element 22 to indicate the correct assembly of the connection bar 2 to the battery terminals 4 of the batteries 6.

Fig. 9 shows a schematic view of a connection bar 2 in the assembled state. In Fig. 9 two housings 12 with a snap fit 20, a connection element 8 and an insulation element 14 can be seen. The connection element 8 is extensible. The connection element 8 has an extensible wavelike shape.

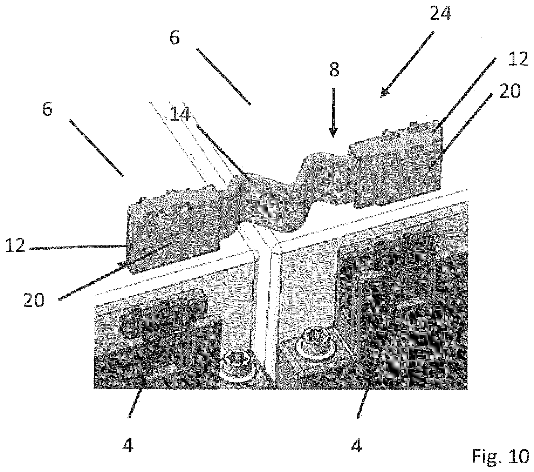

Fig. 10 shows a schematic view of a battery unit 24. The battery unit 24 has two batteries 6. The two batteries 6 each comprise a battery terminal 4. The battery unit 24 has a connection bar 2. The connection bar 2 connects one battery terminal 4 of each battery 6 to each other.

## Claims

1. Connection bar (2) for connecting battery terminals (4) of batteries (6) to each other, comprising
- a connection element (8),
- at least two conductor elements (10) for contacting a battery terminal of a battery,
- at least two housings (12),
- wherein the at least two conductor elements (10) are attached to the opposite ends of the connection element (8),
- wherein the at least two housings (12) are arranged on the at least two conductor elements (10),
- wherein the at least two housings (12) are configured to fix the at least two conductor elements (10) to the battery terminals (4) of the batteries (6).

2. Connection bar (2) according to claim 1,
**characterized in that**
the connection bar comprises at least one insulation element (14),
wherein the at least one insulation element (14) is arranged on the connection element (8),
wherein the surface of the connection bar is insulated by the at least two housings (12) and the at least one insulation element (14).

3. Connection bar (2) according to claim 1 or 2,
**characterized in that**
the at least two conductor elements (10) have each at least two clamp legs (16), wherein at least one of which is elastically moveable so as to vary an interspace between the clamp legs (16).

4. Connection bar (2) according to any one of claims 1 to 3,
**characterized in that**
the at least two conductor elements (10) are welded to the connection element (8).

5. Connection bar (2) according to any one of claims 1 to 4,
**characterized in that**
the connection bar (2) comprises at least two clips (18),
wherein one of the at least two clips (18) is arranged on one of the at least two conductor elements (10),
wherein the at least two clips (18) are configured to strengthen the contact
between the at least two conductor elements (10) and the battery terminals (4) of a battery (6).

6. Connection bar (2) according to any one of claims 1 to 5,
**characterized in that**
the at least two clips (18) comprise or consist of a spring steel.

7. Connection bar (2) according to any one of claims 1 to 6,
**characterized in that**
the at least two housings (12) comprise each a snap fit (20) to fix the connection bar (2) to the battery terminals (4) of the batteries (6).

8. Connection bar (2) according to any one of claims 1 to 7,
**characterized in that**
the at least two housings (12) each comprise an opening to insert the battery terminal,
wherein the at least two housings (12) are configured to prevent a movement of the connection element (8), the at least two conductor elements (10) and/or the at least two clips (18) relative to the at least two housings (12) in a plane comprising the opening or a plane parallel to the plane of the opening, and/or
wherein the at least two housings (12) are configured to insulate a battery terminal (4), in particular the at least two housings (12) are configured to cover at least partially, in particular in a form fit manner, a battery terminal (4).

9. Connection bar (2) according to any one of claims 1 to 8,
**characterized in that**
the at least two housings (12) comprise an information element (22) to indicate the correct assembly of the connection bar (2) to the battery terminals (4) of the batteries (6).

10. Connection bar (2) according to any one of claims 1 to 9,
**characterized in that**
the connection element (8) is extensible, in particular has an extensible wavelike shape.

11. Method to produce a connection bar (2), in particular a connection bar (2) according to any one of claims 1 to 10; comprising the steps:
- providing a connection element (8),
- connecting, in particular welding, at least two conductor elements (10) for contacting a battery terminal of a battery to the opposite ends of the connection element (8),
- arranging at least two housings (12) on the at least two conductor elements (10).

12. Method according to claim 11,
**characterized in that**
at least one insulation element (14) is arranged on the connection element (8), and wherein the surface of the connection bar (2) is insulated by the at least one insulation element (14) and the at least two housings (12), and
wherein in particular the connection element (8) is formed into a wavelike shape before or after the at least one insulation element (14) is arranged on the *connection element (8).

13. Method according to claim 11 or 12,
**characterized in that**
at least two clips (18) are arranged on the at least two conductor elements (10) before arranging the at least two housings (12) on the at least two conductor elements (10).

14. Battery unit (24), in particular in a high current power supply system, the battery (24) unit having at least two batteries (6) and at least one connection bar (2) according to any of claims 1 to 10,
wherein the at least two batteries (6) each comprise at least two battery terminals
**characterized in that**
the at least one connection bar (2) connects one battery terminal 4 of each battery 6 to each other.

15. Method for assembly of a battery unit (24) according to claim 14 comprising the steps:
- providing at least two batteries (6) each comprising at least two battery terminals (4),
- providing a connection bar (2), in particular according to any one of claims 1 to 10,
- connecting one battery terminal of each battery to each other by the at least one connection bar (2).
